# EUROPEAN PATENT APPLICATION

(11) **EP 2 448 134 A2**
(43) Date of publication of application: **02.05.2012**
(21) Application number: 11186983.0
(22) Date of filing: 27.10.2011
(51) Int. Cl.: H04B 5/00, G06F 1/16, H02J 7/00, H04M 1/02

(54) **System and method for inductively pairing devices to share data or resources**

(30) Priority: 29.10.2010 US 916388
(71) Applicant: Hewlett-Packard Development Company, L.P., Houston, TX 77707 (US)
(72) Inventor: Manjirnath, Chatterjee, San Francisco 94103 (US); Liu, Eric, Santa Clara 95051 (US); Skillman, Peter, San Carlos 94070 (US)
(74) Representative: Potter, Julian Mark

(57) **Abstract**

A computing device is configured to inductively communicate with one or more other devices. The device inductively communicates to (i) determine an identity or class of the second device, and (ii) perform a function that includes communicating with the second device. The function is performed automatically, and is based on the identity or class of the second device.

## Description

### RELATED APPLICATIONS

This application is a continuation-in-part of U.S. Patent Application No. 12/620,478, filed November 17, 2009, entitled EXTENDING DEVICE FUNCTIONALITY AMONGST INDUCTIVELY LINKED DEVICES; which benefit of priority to Provisional U.S. Patent Application No. 61/142,617, entitled AUDIO DOCKING STATION WITH MAGNETIC POWER COUPLING AND AUTOPAIRING, filed January 5, 2009; the aforementioned priority application being hereby incorporated by reference.

This application is also a continuation-in-part of U.S. Patent Application No. 12/478,766, filed June 4, 2009, entitled INDUCTIVE SIGNAL TRANSFER SYSTEM FOR COMPUTING DEVICES; which is a continuation-in-part of U.S. Patent Application No. 12/239,656, filed September 26, 2008, entitled ORIENTATION AND PRESENCE DETECTION FOR USE IN CONFIGURING OPERATIONS OF COMPUTING DEVICES IN DOCKED ENVIRONMENTS, which claims benefit of priority to the following applications: Provisional U.S. Patent Application No. 61/142,560, filed January 5, 2009, entitled ELECTRICAL APPARATUS FOR REAL TIME WIRELESS POWER DELIVERY; Provisional U.S. Patent Application No. 61/142,194, filed December 31, 2008, entitled PROTOCOL FOR REAL TIME POWER AND ACCESSORY DATA CONNECTION; Provisional U.S. Patent Application No. 61/142,195, filed January 1, 2009, entitled TECHNIQUES FOR MAGNETICALLY COUPLING CHARGING CIRCUITS AND DEVICES; Provisional U.S. Patent Application No. 61/142,602, filed January 5, 2009, entitled MAGNETIC CLASP WITH MULTIPLE ORIENTATIONS AND ORIENTATION DETECTION; all of the aforementioned priority applications being hereby incorporated by reference in their entirety.

This application hereby incorporates by reference the following: U.S. Patent Application No. 12/841,001, filed July 21, 2010, entitled POWER BRIDGE CIRCUIT FOR BI-DIRECTIONAL INDUCTIVE SIGNALING; and U.S. Patent Application No. 12/628,401, filed December 01, 2009, entitled POWER BRIDGE CIRCUIT FOR BI-DIRECTIONAL WIRELESS POWER TRANSMISSION.

### TECHNICAL FIELD

The disclosed embodiments relate to a system and method for inductively pairing devices to share data or resources.

### BACKGROUND

The use of docking stations and other accessory devices in connection with mobile computing devices (e.g. smart phones, media players etc.) is well known. Traditionally, docking stations are used to (i) recharge or supply power to the mobile computing device, (ii) enable the computing device to communicate with other devices connected to the docking station (e.g. synchronization with a personal computer), or (iii) use additional resources provided with the docking station (e.g. speakers for audio output).

In a traditional scheme, docking stations and mobile computing devices connect using insertive male/female connectors. Numerous factors come into consideration when mobile devices are designed with connectors for use with docking stations. For example, such connectors typically take into account the ease by which users may establish the connection (e.g. can the user simply drop the device into the cradle), as well as the mechanical reliability of the connectors. When users repeatedly mate devices with docking stations, both the mating action and the removal of the device from the docking station can strain the connector structure and its elements.

Connectors also restrain the amount by which a device's form factor can be reduced in thickness and/or other dimensions. Connector schemes (particularly those that abide by an industry standard) have constraints that dictate the physical dimensions of the male and female ends of the connectors. As devices get smaller, accommodating the size constraints of the connectors has become more challenging.

### BRIEF DESCRIPTION OF THE DRAWINGS

FIG. 1A through FIG. 1C illustrate an example of two devices that are inductively paired to exchange data, according to one or more embodiments.

FIG. 2 illustrates an example of a device configured to be inductively paired with other devices, in accordance with embodiments described herein.

FIG. 3 illustrates an example of a method for inductively pairing two devices to share data or resources, according to one or more embodiments.

FIG. 4 illustrates an example of a method in which a computing device operates in a data sharing mode in response to being inductively paired with another device, according to one or more embodiments.

FIG. 5 illustrates an example of method for enabling a device to be inductively paired with numerous other devices of different classes, according to one or more embodiments.

FIG. 6 illustrates an example of a method for inductively pairing two devices for purpose of exchanging credentials and establishing an alternative communication link, under an embodiment.

FIG. 7 illustrates an example of a method for inductively pairing a device with a docking station in order to communicate media or other output, under an embodiment.

FIG. 8 illustrates an example of a method for inductively pairing a device to a printer in order to enable printing functionality, under an embodiment.

FIG. 9 illustrates an example of a method for inductively pairing a mobile computing device to a computer to share content or resources, under an embodiment.

FIG.10 illustrates an example of a method for inductively pairing a mobile computing device to a gaming environment to enable remote control and/or gaming controls from the mobile computing device, under an embodiment.

FIG. 11 illustrates a multi-device environment in which inductive pairing can be used to interconnect devices, according to an embodiment.

### DETAILED DESCRIPTION

Embodiments described herein include a computing device that is configured to inductively communicate with one or more other devices. More specifically, embodiments provide for a computing device that inductively pairs with another device in order to (i) determine an identity or class of the second device, and (ii) perform a function for communicating data to the second device. The function may be performed automatically, and can be based on the identity or class of the second device.

In some embodiments, the function includes prompting a user to accept a sharing mode with the second computing device. In a sharing mode, a data resource of the computing device is shared with or communicated to the paired computing device.

According to some embodiments, devices are configured to enable inductive pairing with numerous types of devices. A device may inductively pair with another device in order to communicate data for establishing an alternative high-bandwidth communication channel (e.g. Bluetooth or WiFi) with the other device. Once such a communication channel is established, one or both devices may perform functions to share data or resources.

As used herein, the term "inductive" or "inductively" refers to use of electromagnetism to transfer an electrical signal. An inductive signal transfer uses electromagnetic flux variations or electromagnetic resonance to induce signal transfer. Electromagnetic resonance or evanescent coupling can enable inductive coupling even when the devices that are being coupled are physically separated from one another.

Some embodiments described herein may be implemented using programmatic elements, often referred to as modules or components, although other names may be used. Such programmatic elements may include a program, a subroutine, a portion of a program, or a software component or a hardware component capable of performing one or more stated tasks or functions. As used herein, a module or component, can exist on a hardware component independently of other modules/components or a module/component can be a shared element or process of other modules/components, programs or machines. A module or component may reside on one machine, such as on a client or on a server, or a module/component may be distributed amongst multiple machines, such as on multiple clients or server machines. Any system described may be implemented in whole or in part on a server, or as part of a network service. Alternatively, a system such as described herein may be implemented on a local computer or terminal, in whole or in part. In either case, implementation of system provided for in this application may require use of memory, processors and network resources (including data ports, and signal lines (optical, electrical etc.), unless stated otherwise.

Some embodiments described herein may generally require the use of computers, including processing and memory resources. For example, systems described herein may be implemented on a server or network service. Such servers may connect and be used by users over networks such as the Internet, or by a combination of networks, such as cellular networks and the Internet. Alternatively, one or more embodiments described herein may be implemented locally, in whole or in part, on computing machines such as desktops, cellular phones, personal digital assistances or laptop computers. Thus, memory, processing and network resources may all be used in connection with the establishment, use or performance of any embodiment described herein (including with the performance of any method or with the implementation of any system).

Furthermore, some embodiments described herein may be implemented through the use of instructions that are executable by one or more processors. These instructions may be carried on a computer-readable medium. Machines shown in figures below provide examples of processing resources and computer-readable mediums on which instructions for implementing embodiments of the invention can be carried and/or executed. In particular, the numerous machines shown with embodiments of the invention include processor(s) and various forms of memory for holding data and instructions. Examples of computer-readable mediums include permanent memory storage devices, such as hard drives on personal computers or servers. Other examples of computer storage mediums include portable storage units, such as CD or DVD units, flash memory (such as carried on many cell phones and personal digital assistants (PDAs), and magnetic memory. Computers, terminals, network enabled devices (e.g. mobile devices such as cell phones) are all examples of machines and devices that utilize processors, memory, and instructions stored on computer-readable mediums.

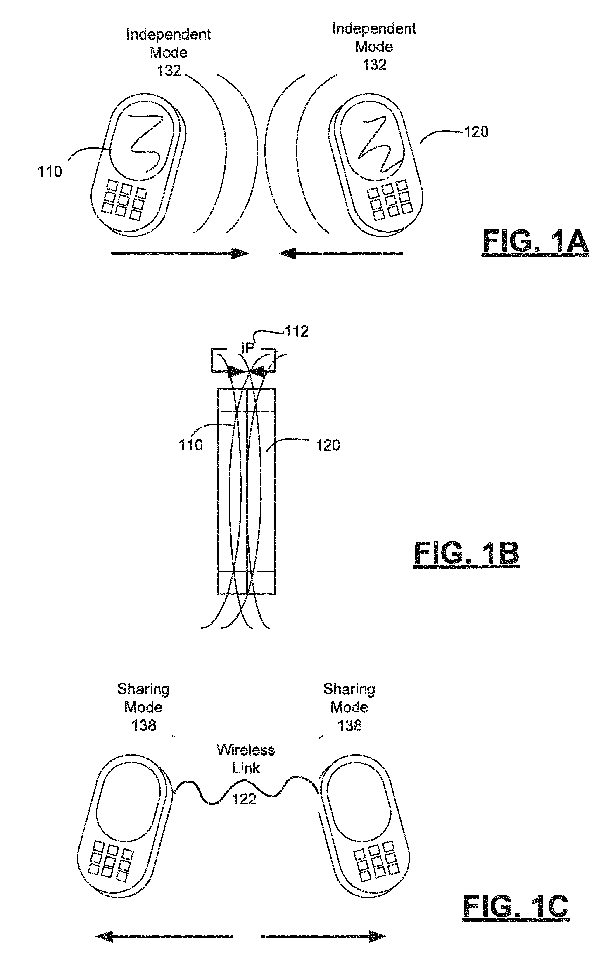

FIG. 1A through FIG. 1C illustrate a pair of devices that inductively couple to exchange data, according to one or more embodiments. According to an embodiment shown, mobile computing devices 110, 120 are each enabled to inductively transmit and/or receive power or data. The devices 110, 120 can be inductively paired to inductively signal power and/or data to one another. In particular, an embodiment provides that (i) each mobile computing device 110, 120 is capable of sending and receiving power to the other device over an inductive link 112; and (ii) the mobile computing devices 110, 120 are capable of exchanging data over the inductive link 112.

According to some embodiments, the devices are inductively paired by communicating data to one another using the inductive link 112. The inductive pairing can include (i) one or both devices determining an identity or class of the other devices in the pairing, and (ii) one or both devices automatically performing a function that is based on the identity or class of the other device.

According to some embodiments, the inductive pairing is accomplished by bringing an inductive signal interface of the two devices 110, 120 into close proximity to one another. For example, some embodiment provide that the inductive signal interface of individual devices 110, 120 are on the respective rear facades of each device. To effect an inductive pairing, the rear facades of the two devices may be brought into close proximity or contact with one another. Under some embodiments, the duration of the contact is short-for example, two devices may be tapped against one another (rear facades tapped to one another) in order to initiate and complete the inductive pairing process.

In an embodiment, the function performed by one or both devices as a result of the inductive pairing is to operate in a sharing mode 138. In the sharing mode 138, a data resource on one device is shared with the other device. The resource can correspond to, for example, a record (e.g. contact record or calendar entry), a file (e.g. a picture, video clip or audio file), content that is displayed or rendered on one device (e.g. rendered web page), stored information, an application or an application data output, or a control resource (e.g. programmatic resource for receiving command input from another device) that enables one device to be controlled from another device.

In some embodiments, the devices 110, 120 prompt the user as to whether data transfer (or operation in the data transfer mode) is to take place in response to the inductive pairing. For example, one or both devices may prompt the user with a message regarding the inductive pairing, and enable the user to provide input or other confirmation as to the data that is to be shared.

According to some embodiments, a sequence of events such as described with FIG. 1A through FIG. 1C may trigger one or more automated responses that are directed to performing or enabling one or more data sharing functions on a given device. In one embodiment, one or both of the computing devices 110, 120 respond to the inductive pairing by automatically prompting the user as to whether the device should operate in the sharing mode. As an addition or alternative, one or both devices may be configured to automatically implement functions for sharing data or implementing a data sharing mode.

Still further, in some embodiments, the user of each of the two devices 110, 120 may perform other actions to generate and/or select data to be shared.

The following provide some examples as to how the sharing mode 138 can be implemented on the two devices. The user on device 110 may render media (e.g. video clip) which is automatically transmitted to the other device, so that the two devices share the experience of watching the media. The user may open a record (e.g. task, calendar entry, contact record) and optionally enter input (e.g. press soft key) for transferring the data to the device identified by the inductive pairing. Still further, the user of one device may open an application (or have an application opened) in the sharing mode, then perform an action to close the application, causing data created in that instance of the application to be transmitted to the other device. As a result of the devices operating in the sharing mode 138, the display screen in the both devices 110, 120 may display a content that was previously displayed on only one of the two devices.

Data or resources that are shared amongst devices when operating in the sharing mode 138 can be communicated by way of a wireless link (other than the inductive channel 112). In an embodiment, the devices may communicate data using inductive channel 112 in order to establish a non-inductive wireless link for transfer of data in the sharing mode. Specifically, the devices may communicate, for example, credential data for enabling a subsequent wireless communication link 122 (e.g. Bluetooth or 802.11 type communications). Credential data (or credential information) for enabling establishment of a wireless RF communication channel includes parameters for device identifiers, network location and device type information. For example, credential data can include the data two devices exchange in order to establish a Bluetooth pairing. The devices 110, 120 can use the communication link 122 to exchange data in the sharing mode 138.

Furthermore, in some embodiments, the inductive pairing can be accomplished between devices using a brief physical interaction. In particular, the inductive pairing can be used to establish a wireless link from which subsequent transfer of data takes place using the sharing mode. As such, the duration of physical interaction between the two devices may be brief, and the establishment of the device transfer mode may be done instantaneously (e.g. less than a second). As illustrated by FIG. 1A, the devices 110, 120 may initially be operated in an independent mode 132 from one another. To inductively pair the two devices, FIG. 1B illustrates the two devices 110, 120 being brought into close proximity or contact with one another. The physical interaction may correspond to a tab, so as to last less than a second (e.g. 300-600 ms). The two devices can then be separated, but one or both devices may then be operable in the sharing mode 138, in which the devices continue to communicate but use a wireless communication channel 122. In the sharing mode, one or both devices perform functions of communicating data to the other device for a particular purpose.

Among other benefits, the inductive pairing requires physical interaction by the two devices. The physical interaction provides inherent security or authentication, in that the user of each device has to cause the physical interaction to occur. Thus, for example, the inductive pairing 112 does not allow for one device to be sniffed or hacked from a distance, as can be the case with Bluetooth.

While an embodiment described with FIG. 1A through FIG. 1C is described in context of two mobile computing devices 110, 120, other embodiments may provide for other types of devices to be inductively paired. For example, the devices 110, 120 can correspond to alternative forms of computing devices, such as laptops, netbooks, tablets (or slate devices) or personal computers. Still further, one of the paired devices can correspond to an accessory device (e.g. wireless headset for telephony, wireless computerized watch or other jewelry), docking station with functionality (media player dock, automobile dock, personal computer or PC dock) or other kind of device (e.g. printer).

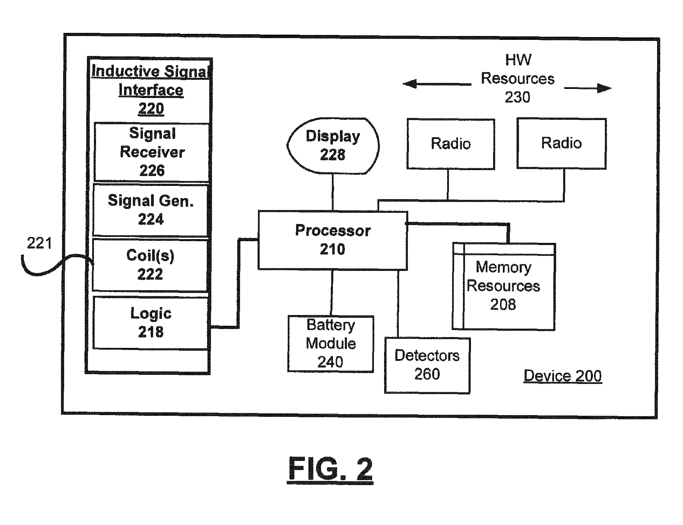

FIG. 2 illustrates a device configured to be inductively paired with other devices, in accordance with embodiments described herein. A device 200 may be configured to include any of the functionalities or capabilities described with other embodiments, including the ability to receive electrical signals (power and/or data) using conductive or inductive signal paths. Thus, as mentioned with other embodiments, the device 200 may correspond to, for example, a 'smart phone', a mobile companion, a media player, a digital camera, or a GPS unit (or to a multi-function device that can perform as many of the devices described).

According to embodiments, device 200 may correspond to a mobile telephony/data messaging computing device, such as a cellular phone or mobile device with voice-telephony capabilities (sometimes called "smart phone"). A computing device such as described may be small enough to fit in one hand, while providing cellular telephony features in combination with other applications, such as messaging, web browsing, media playback, personal information management (e.g. such as contact records management, calendar applications, tasks lists), image or video/media capture and other functionality. Other examples of functionality that may be provided from the device 200 include audio and/or video playback or Global Positioning Services (GPS) as primary or enabled functions. The device 200 may have numerous types of input mechanisms and user-interface features, such as keyboards or keypads, multi-directional or navigation buttons, application or action buttons, and contact or touch-sensitive display screens or buttons. In the case of data messaging/communication devices, specific types of messaging or communications that may be performed includes messaging for email applications, Short Message Service (SMS), Multimedia Message Service (MMS), and proprietary voice exchange applications (such as SKYPE).

As described with various embodiments, however, the device 200 may correspond to numerous other types of computing devices, such as to a notebook computer, laptop (or variations, such as netbook or ultra-mobile computer), tablet, desktop computer, printer, television, projector, docking station (including media dock or automobile dock) or accessory device (e.g. headset, fingerprint reader). The inductive signal interface 220 and various hardware and software resources described may be integrated to accommodate the platform, form-factor and functionality of various other kinds of devices. For example, in the case of a docking station, the hardware components may include resources for providing interfacing with a power outlet, media output device or computer. In the case of a printer, the components described in device 200 may be integrated into the printing device. As still another alternative or variation, the components described in device 200 may be provided as a self-contained accessory device that mates with another device (e.g. personal computer or laptop, printer etc.).

According to an embodiment, the device 200 includes one or more processors 210, memory resources 208, a display assembly 228, and hardware resources 230 (such as wireless radios and modules) for enabling communication ports. A battery module 240 may power the components of the device. The communication ports that are enabled by the hardware resources 230 (radios etc.) may include wireless or wireline ports. Wireless communication ports may be implemented through, for example, local wireless communication protocols such as provided by LUETOOTH standards, Wireless Fidelity (802.11(b) or (g)). The wireless communication ports may also communicate over a cellular network. More specifically, the device 200 may include one or more wireless communication ports to provide connectivity of a particular type. For example, the communication port 230 may include or correspond to (i) a Wide Area Network (WAN) radio module for sending and receiving cellular voice/data, (ii) a local wireless communication port such as Bluetooth or wireless USB, (iii) an infrared port, (iv) a Global Positioning System radio, and/or (v) a WiMAX radio.

In an embodiment, the device 200 includes an inductive signal interface 220 (or module), which includes hardware and logic for accepting and/or transmitting power or data signals using an inductive communication medium. The inductive signal interface 220 includes one or more coils 222 that generate or detect inductive signals 221, which may correspond to magnetic field variations (or resonance). In variations in which electromagnetic resonance coupling is used, the coil 222 may be designed to pair with similar coils on other devices that are highly resonant at the same frequency. The inductive signal interface 220 may also include signal generating circuitry 224 to drive power and/or data signals on the coil 222. Additionally, the inductive signal interface 220 includes receiver circuitry 226 to handle power and/or data signals that are driven on the coils 222. The inductive signal interface 220 may also include logic 218 to generate outgoing signals to carry information, as well as to interpret (e.g. demodulate) incoming signals. Various components and elements of an inductive signal interface are described in applications that are incorporated by reference herein, including U.S. Patent Application No. 12/620,478, U.S. Patent Application No. 12/478,766 and U.S. Patent Application No. 12/239,656.

According to some embodiments, device 200 inductively signals (or receives) both power and data. The inductive signal interface 220 may receive an inductive power signal to power components of the device, as well as to charge the batter module 240. As an addition or variation, the inductive signal interface 220 may inductively transmit a power signal to another device. The inductive transmission of power may originate from, for example, the battery module 240.

The memory resources 220 may, for example, include Flash memory, Random Access Memory, and/or persistent memory (i.e. ROM). The memory resources 220 include instructions and data for implementing functionality and programmatic actions such as provided with any of the embodiments described.

As another option, the device 200 includes one or more detectors (or sensors) for detecting orientation or position of either device 200 (or an inductively linked device, such as when device 200 is a dock). According to one embodiment, detectors 260 are provided in the form of sensors that independently detect the orientation of the device 200. For example, the detectors 260 may correspond to accelerometers or vertical position sensors that detect the orientation of the device 200 at any given instance.

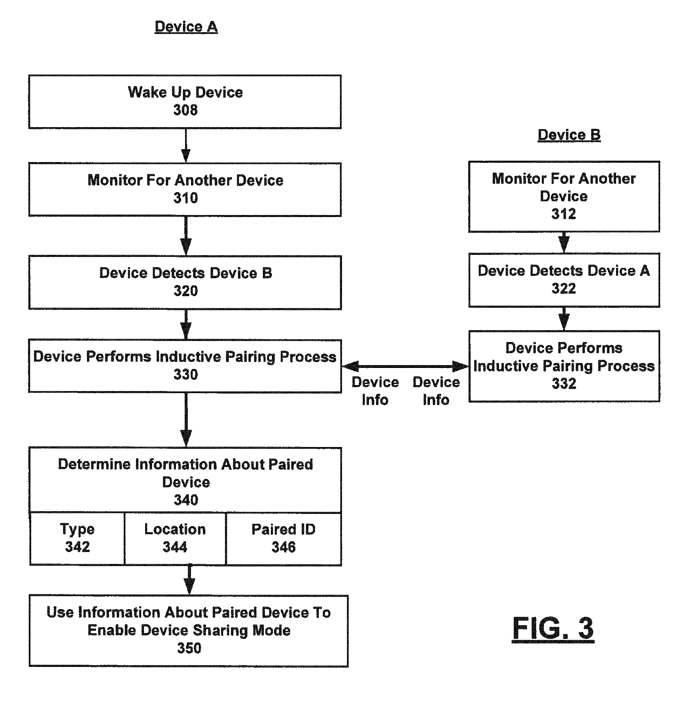

FIG. 3 illustrates a method for inductively pairing two devices to share data or resources, according to one or more embodiments. In describing FIG. 3, reference is made to elements of FIG. 1A-1C and FIG. 2 for purpose of illustrating suitable components or elements for performing a step or sub-step being described.

An embodiment of FIG. 3 may be assumed to operate in an environment in which two devices are brought into contact or close proximity to establish an inductive link. Accordingly, an inductive link or pairing may be established between a first device ("Device A"; or 110) and a second device ("Device B"; or 120), each of which may be operated by different users. As mentioned with other embodiments, each of Devices A and B may each correspond to, for example, a mobile computing device (e.g. cellular telephony/messaging and data device), or alternatively, a portable and small-form factor computing device (e.g. tablet or slate, laptop, netbook). However, embodiments such as described may be implemented on any type of computing device equipped with hardware such as an inductive signal interface 220 (see FIG. 2) and other resources for enabling inductive pairing.

Prior to inductive pairing, one or both devices may be in a sleep or low-power state (308). The device (or its inductive signal interface) may be maintained in the low power state, meaning the device is 'off' or inactive. Some embodiments provide that from such a state, device 110 can be wakened with a trigger that corresponds to presence of a predetermined condition. In some embodiments, triggers may include (i) detecting presence or change of a wireless RF (e.g. Bluetooth, WiFi) communication medium, and/or (ii) detecting magnetic field. The magnetic field detection is a precursor to an inductive pairing, as it may signify an approaching device that is about to make contact (or become sufficiently close to make such contact) for purpose of inductive pairing.

Examples of wireless RF characteristics that can serve as a trigger for waking the device (or its inductive signal interface) for purpose of inductive pairing include: (i) a new device being detected for RF pairing (e.g. Bluetooth or 802.11), or (ii) a presence or sudden change in signal strength (e.g. such as for 802.11 type connectivity). If the device detects itself being in the presence of a strong 802.11 signal- (e.g. if device 110 encounters a strong WiFi signal), it activates its inductive signal interface (See FIG. 2) in anticipation of being inductively paired with another device. Similar triggers may be incorporated with other forms of RF communication mediums, including Bluetooth or cellular mediums. The determination that a signal is strong may be based on the signal strength of the particular signal exceeding some minimum designated threshold.

As an addition or alternative, one or more embodiments provide that the triggers for waking the device rely on presence of both inductive pairing trigger and radio-frequency trigger. The presence of both triggers signify, for example, that a device is to be paired and then coupled by RF for data sharing. Furthermore, both triggers are detectable without the two devices having to actually be paired. In this way, the resources that are used to monitor for inductive pairing and/or RF coupling may be maintained at least partially in a low power state in order to preserve battery life.

As another alternative or addition, the device (or its inductive signal interface) may be awakened with sound activation (e.g. ultrasonic) or light activated (e.g. using camera or light sensor). Light sensors, for example, can detect the presence of another object that is approaching the inductive signal interface. ,

The devices 310, 312 may awaken, or otherwise monitor the inductive signal interface 220 for presence of another device (310, 312). In one embodiment, each device monitors for another device by (i) continuously transmitting a ping through the device's respective inductive signal interface 220, and (ii) continuously listening for pings or acknowledgements from another device. The devices detect one another (320, 322) when they are brought into contact (e.g. touch) or sufficient close proximity to enable detection of the inductive signals. The detection may correspond to, for example, (i) Device A transmitting a ping and then receiving an acknowledgement from Device B when the two devices are brought into contact, and/or (ii) Device B transmitting a ping and then receiving an acknowledgement from Device A.

As a variation, the process of monitoring (as described with 310, 312) on either device can be reduced or eliminated with triggers that awaken the device or its inductive signal interface just prior to another device making contact or otherwise approaching.

Once the devices detect one another, the devices may perform an inductive pairing process (330). The inductive pairing process may be performed in accordance with a protocol, in which each device communicates information about itself, and receives information about the other device. The protocol performed on each device may communicate information such as device type, device identifier, and signal interface type. Other information that may be communicated as part of the inductive pairing process include devices identifying themselves by location, or communicating information for enabling additional functionality. In particular, information may be communicated to enable establishment of other communication channels between the two devices.

As part of the inductive pairing process, Device A determines information about the paired device (340). In particular, Device A may indentify, from inductively communicated data, (i) a class for Device B (342), (ii) a location for Device B (344), and/or (iii) an identifier for Device B (346). The class of Device B may correspond to, for example, a type of device, a software type (e.g. type of operating system), software or firmware version, and/or the type (or version) of inductive signal interface 220 employed by Device B. The location may correspond to either a physical or network location of Device B. This information may also be inferred (e.g. Device B may be known to Device A to reside at a particular location, such as at work) or communicated directly from Device B. The identifier may be unique to Device B, and communicated by Device B as part of the inductive pairing process. Device B may determine similar information about the Device A.

In an embodiment shown by FIG. 3, Device A is assumed to perform configuration operations to utilize the inductive signal interface 220. For example, Device A may enter the sharing mode, as described with other embodiments. Device B may operate similarly. As an alternative or variation, Device B may have one mode of operation to share resources with a paired device, and as such, perform minimal configurations as a result of the inductive pairing with Device A. Still further, only one device may share or exchange information with the other device after the inductive pairing.

In addition, some embodiments provide that the inductive pairing includes the exchange of credential information between the two devices for purpose of establishing an alternative communication channel. The alternative communication channel may be implemented by, for example, a radio frequency medium such as Bluetooth or WiFi, or to a network connection such as a secure LAN.

Device A uses the information communicated from Device B to enable device sharing functionality (350). The device sharing functionality (or mode) may result in data generated and/or stored in Device A being shared with Device B, or data from Device B being generated and/or stored in Device A, for some purpose that is determined at least in part by the information that is inductively communicated during the pairing process.

In some embodiments, the data transfer between the two devices may be accomplished over an alternative communication channel between the two devices. For example, the two devices may exchange data in the sharing mode using Bluetooth or WiFi. Alternatively, an inductive channel may be used to communicate at least some data amongst the devices.

In some embodiments, sharing mode may enable one or both devices to share select information and data with the other device. Such information and data may include files, data, programs (or instructions) and other resources. The information determined about Device B may be used to select or configure what information is exchanged with Device B. The following provide some examples.

1. Device A may be pre-configured to synchronize or transfer information to Device B (e.g. the two devices may be owned by the same user). Device A may identify Device (330, 332), then Device A initiates a synchronization or record transfer process to Device B. The synchronization process may be automatic, or it may require manual input (e.g. user may select to confirm synchronization upon receiving a prompt).

2. Device A can be configured (e.g. by user setting) to transfer certain information when sharing mode is achieved with a device of a particular class (332). When Device B is determined to be of the class, the information may be transferred. The information may be pre-determined, such as to correspond to all files in a particular folder, or pictures or content rendered or opened when the sharing mode is initiated. The transfer may be automated, so that select files are transferred when the inductive pairing occurs. Alternatively, the transfer may be accomplished by automating or facilitating some steps for transferring select data from Device A to the Device B. For example, Device A may generate a prompt that identifies select data (the data may be selected based on, for example, what appears on the display or what is pre-configured to be selected) and provides the user with option to enter selection input to have the data transferred to Device B.

3. Device A may determine that Device B is a class that corresponds to a user computing device (e.g. mobile computing device or tablet). In response to making such determination, the device enables a mode of operation in which the user of Device A is able to select records or files for communication to Device B. As another example, Device A may enable the user to select content for display on Device A and Device B. Device A may, for example, be configured to identify content rendered on Device A (e.g. picture, web page) and transmit corresponding content data to Device B so that the content is also rendered on Device B. As such, the user may view, for example, a larger or more full version of the same content by having the content transferred to a larger form factor device.

4. Device A may be configured to respond to certain user actions when device sharing functionality is implemented. For example, the user may be able to open an application, optionally perform an action to generate or update data (e.g. calendar), and transfer data from the application to Device B by closing the application. In some variations, when device sharing is implemented, Device A (and/or Device B) is provided additional user-interface features that enable Device A to share some data (e.g. picture files) with Device B. The files that are shared may be selected by the information determined from the inductive transfer. For example, Device A may select to transfer and share picture files with Device B when it is determined that Device B is a television or has a high quality display. Likewise, Device A may select to transfer music when Device B is recognized as being a playback device.

5. Device A may be preconfigured to transmit network credentials (e.g. password and login) to an inductively linked device when it detects the inductive pairing is at a particular location. Device B may communicate information that indicates, for example, a physical or network location of the user's work, and Device A may then perform steps for communicating network credentials to log Device A onto the user's enterprise network.

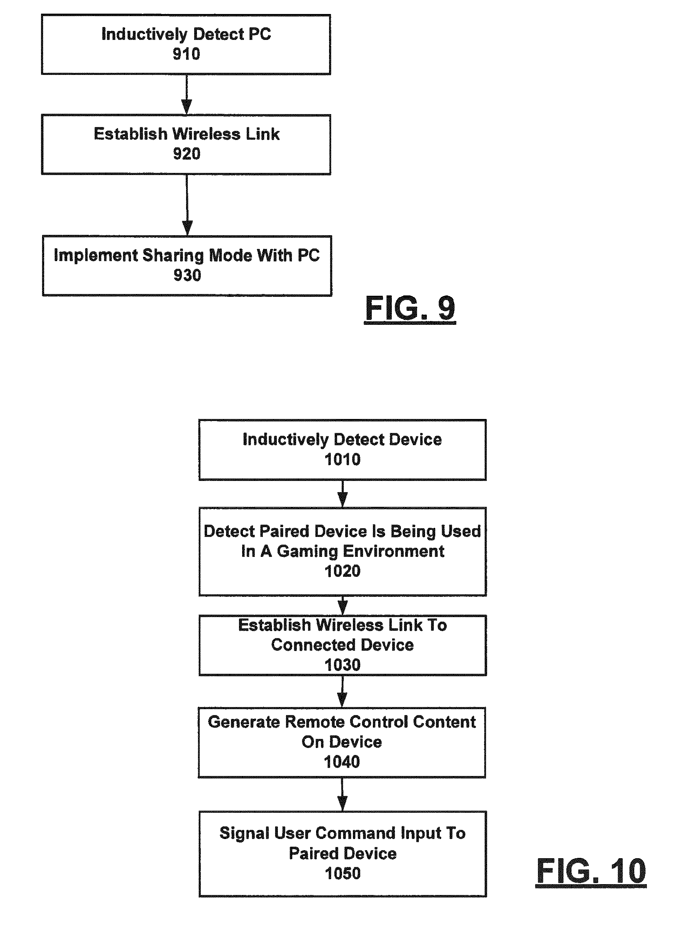

Still further, some embodiments provide that the sharing mode enables the two devices to initiate and engage in a process that involves greater interaction between the two devices (e.g. one device controls another device). For example, Device A may procure information from Device B in order to control certain operations or functions on Device B. As a specific example, Device B may correspond to a television, and Device A may use Device B class and/or identification to present a remote control for Device B. Commands entered onto Device A are then communicated as control data to Device B (e.g. turn on, change channel, alter volume etc.). An example of executing control operations as part of implementing a sharing mode is described with an embodiment of FIG. 10.

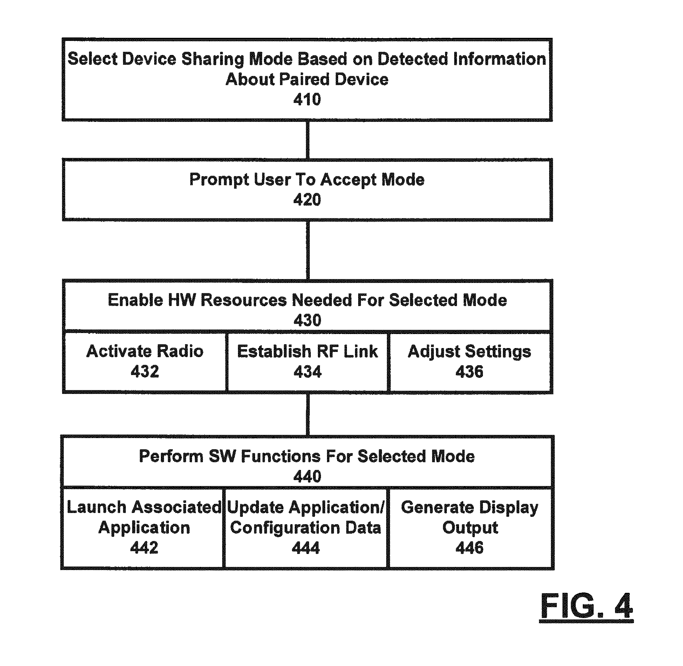

FIG. 4 illustrates a method in which a computing device operates in a data sharing mode in response to being inductively paired with another device, according to one or more embodiments. In describing FIG. 4, reference is made to elements of FIG. 1A-1C or FIG. 2 for purpose of illustrating suitable components or elements for performing a step or sub-step being described.

Upon the computing device 110 (or 120) being inductively paired, one embodiment provides that a sharing mode is selected based on information that is determined from the inductive pairing (e.g. class or identity of paired device) (410). As described with various embodiments, device 110 may have multiple device sharing profiles, and the particular profile selected for sharing data with the paired device 120 may depend on the type and/or identity of the paired device.

According to some embodiments, the user of one or both devices has an option as to whether device sharing functionality is to be performed or enabled once inductive pairing with the other device is complete (420). For example, with reference to FIG. 1C, the user of device 110 may have an option as to whether he wishes to perform device sharing functionality with device 120 once the inductive pairing process takes place. The user of device 120 may have a similar option with regard to device 110. In some implementations, how individual devices respond to being inductively paired with other devices is a matter of user setting or preference. For example, the user of device 110 may elect to always be prompted before sharing information with another device. Alternatively the user of device 110 may automate implementation of a sharing mode or functionality when, for example, the inductive pairings is with a specific device (as identified by device identifier in sub-step 346 of FIG. 3) or class of device (see sub step 342 of FIG. 3).

According to some embodiments, implementation of sharing mode may require the use of additional hardware resources (430). In particular, the sharing mode may implemented using a communication medium that supports a relatively high bandwidth for data transfer, such as, for example, over a Bluetooth or Wi-Fi connection. Accordingly, once the inductive pairing occurs, a radio component for establishing the connection may be activated (432). Additionally, instructions may be automatically implemented on each device to perform the protocol or handshaking process required to establish a wireless link between the two devices (434). More specifically, the establishment of a radiofrequency connection (e.g. Bluetooth) may require the use of credential information, which can be exchanged during the inductive pairing process. Furthermore, both devices may be configured to automate steps involved in configuring both devices for the RF communication link. For example, both devices may be equipped to perform steps involved in establishing a Bluetooth pairing, using credential information that was exchanged during the inductive pairing process.

In addition to activating and using radio or other hardware components, one more embodiments provide for the device that is paired to adjust its own hardware settings for a particular purpose that is enabled by the device sharing functionality (436). For example, if the device is paired to a media dock, the device may disable its own audio output, so as to not interfere with audio output from media dock.

If the inductively paired device is to enter the sharing mode, one more embodiments provide that the device performs certain software functions for the mode (440). In some embodiments, multiple different sharing modes are enabled, particularly for different devices, and the particular software function performed for a given sharing mode may depend on the type or identification of the inductively paired device.

Examples of software functions that can be performed in response to the device being operated in a sharing mode include (i) launching a specific application for the particular mode or paired device (442), (ii) configuring or establishing a setting for application process based on, for example, the type or identifier of the paired device (444), and/or (iii) generate display output that is to be used or shared for the sharing mode (446). Numerous examples of the various implementations and embodiments are described in greater detail below.

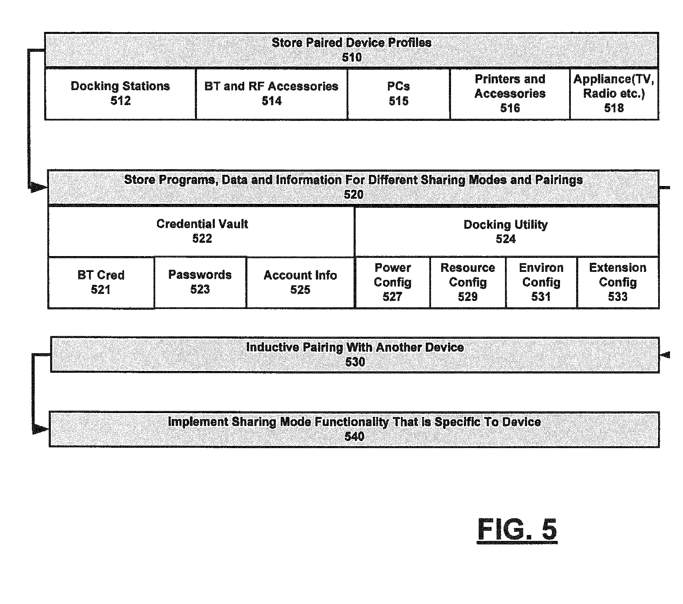

FIG. 5 illustrates a method for enabling a device to be inductively paired with numerous other devices of different classes, according to one or more embodiments. More specifically, FIG. 5 describes embodiments in which a computing device is enabled to inductively pair and exchange data with numerous different devices, including devices of different types. In describing an embodiment of FIG. 5, reference is made to elements described with other figures for purpose of illustrating a suitable device or component for performing a step or sub-step being described. Additionally, while specific reference is made to FIG. 1A through FIG. 1C (which illustrates mobile computing device implementation), embodiments described herein and with FIG. 5 may be implemented on various computing form factors, such as laptops, tablets and other electronic devices.

An individual device that is enabled for inductive pairing and subsequent data sharing may be configured to accommodate inductive pairing with multiple devices of various device classes. Accordingly, a device that is enabled for inductive pairing may also store profile information for different devices that it can pair with (510). Such profile information may include information that enables the particular device to determine, for example, a particular purpose or functionality that is to be offered by the paired device. The profile information may be provided for devices such as docking stations (512), accessory devices (e.g. Bluetooth headset devices, fingerprint readers) (514), personal computers (including laptops or tablets) (515), printers or other output devices (516), and/or appliances (e.g. television sets) (518).

As an alternative or addition, some or all devices may communicate device profile information on-the-fly during, for example, the inductive pairing process. As an example, when the device is inductively linked to another device, the other device may use the inductive communication medium to transmit information that identifies capabilities or functionality that is available for data sharing. Thus, some or all of the profile information for a particular inductive pairing may be procured at the time of the inductive pairing. As another variation, some or all of the profile information may be determined over an alternative communication channel that is established using information communicated during the inductive pairing process.

In some embodiments, the device may store instructions and data for enabling different sharing modes of operation (520). The different sharing modes and functionality may be implemented by instructions that are associated with (i) a specific device (as determined by a device identifier), (ii) a device class, and/or (iii) other parameters or triggers, such as a location of the inductive pairing, as well as operational state of one or both devices being paired (either before or after the inductive pairing process is complete).

According to embodiments, the instructions and data can include a credential vault (522) that includes (i) credential information for specific purposes, (ii) instructions (e.g. program code) for detecting when such credentials are to be used, and (iii) instructions (including scripts) for implementing use of such credential information. The following identify some specific examples as to instructions and credential information that can be stored on a device for use when inductive pairing occurs.

As described elsewhere, any pairing in which subsequent data transfer requires the use of an alternate communication port (e.g. Bluetooth) may require exchange and use of credential information by one or both devices during the inductive pairing process (521). Thus, credentials such as Bluetooth credentials or device identifiers (which can be communicated inductively), may be associated with instructions to enable the device 110 to establish of an alternative data communication link that can be used for subsequent data transfer activities, including those used to implement a sharing mode on one or both devices. The instructions associated with such credential information can, for example, enable the device to perform programmatic actions. The programmatic actions may be performed in a particular sequence or in accordance with a particular protocol. Such instructions may enable the device 110 to (i) transmit it's credential information to the other device over the inductive link, and (ii) use the credential information from the other device, as received over the inductive link. In this way, the credential information and associated instructions enable the device to establish, for example, a Bluetooth link with another device through the inductive pairing process. Moreover, the establishment of the alternative communication link can be performed automatically (or alternatively, substantially programmatically) in response to the occurrence of the inductive pairing.

The device 110 may also store passwords, instructions on how such passwords are to be used, and triggers or conditions that result in one or both devices using the inductive pairing to communicate a password (523). Information stored with a password may include password-related information, such as login information. Instructions associated with the password may dictate specific functions or sequence of acts that must be performed programmatically in order for the password to be inductively communicated to the other device. In one basic example, a trigger associated with a password corresponds to a specific device identifier (as determined during the inductive pairing process).

In one embodiment, the device 110 stores a login/password, with use instructions on how the login and password is to be used. In addition, the stored information may include the identifier of the device that is to receive the specific login/password when inductively paired. For example, a user may operate a mobile computing device that is inductively paired with the user's own workstation on a frequent basis. The information stored on the computing device 110 may include the login and password for unlocking the workstation, programmatic code for instructing the workstation to apply the login/password, and the identification of the particular workstation (e.g. by device identifier) as a trigger that results in the login/password communication. The information stored for the event may be sufficient to enable the work station to unlock automatically in response to the work station being inductive paired with the computing device 110. Similar information may be stored on one computing device 110 to enable that device to unlock multiple computers that the particular user has access to.

Still further, the login/password information can be for a network account of the user. For example, the information stored on the computing device 110 may supply a network login and password when a particular terminal (e.g. network terminal) is encountered.

As another variation, the password information may include instructions (or be associated with a trigger a setting) on one or both devices to eliminate or reduce a security feature.

In some embodiments, the stored credential information can include account information (525). A user can, for example, store his credit card or checking account number on his device. The information may be associated with instructions that identify device classes that can receive the information (e.g. point-of-sale terminal). Thus, for example, when the device 110 is inductively paired with a point-of-sale terminal, the instructions stored on the device recognize the pairing, and communicate an associated credit card or account number in response to the event. When the inductive pairing does occur, it may result in transmission of account information (e.g. credit card number) for purpose of tendering payment for the transaction. As mentioned elsewhere, embodiments recognize that inductive pairing includes the inherent security feature of the device 110 having to be physically present when the inductive pairing occurs.

In some embodiments, the device 110 stores information for enabling use of docking stations. (524). Among the purposes and functionality provided, docking stations can (i) inductively supply power to, for example, a mobile or portable computing device; (ii) provide hardware resources (e.g. speakers or display screen); and/or (iii) interconnect to a third device or resource and link an inductively paired device with the third device. The information stored for use with docking station pairings include: (i) information to configure a power transmission/reception process (527), (ii) configuration information to utilize a purpose or functionality associated with hardware resources of the docking station (529), (iii) information to configure the device 110 based on an operating environment of the docking station (531), and/or (iv) configuration information to utilize a purpose or functionality associated with an extension of the docking station (e.g. connected device) (533). More specific description regarding the variations to how docking utilities can be accommodated are described below.

(527) During the inductive pairing process, computing device 110 may determine that the paired device is a power supply dock of a particular type. Accordingly, the power configuration information 527 may include (or identify) instructions for handling power supply docks. The instructions may be specific to the class or identity of the dock (as determined by the dock profile information 512). The configuration information 527 configures the reception of power over by the device 110 the inductive link with the identified dock. For example, docking stations are typically connected to wall outlets, in which case the configuration information identifies a default process as to how power is to be received from that docking station. Alternatively, in some situations, a holster dock may be used. A holster dock supplies power from a battery source on an as-needed basis. During the inductive pairing process, the holster dock can be identified (dock profile information 512), and a different set of configuration data may be associated with the profile of the holster dock, so as to enable a different power reception process. For example, the configuration information associated with the holster dock profile may be used to implement a process that draws power from the holster dock on an as needed basis (or alternatively, conditions by which power is supplied to the holster dock). Similar variations may be implemented when the docking station is, for example, an automobile dock.

In some embodiments, the device 110 stores information to identify when it is to act as a power supply when inductively coupled to another device. An inductive communication medium such as used by various embodiments may support bi-directional transmission of power. Accordingly, a mobile computing device may serve as a power source in some cases, such as when there is another mobile computing device, or when an accessory device is connected to the device. Information that may be stored in connection with bi-directional power determination and use include: (i) devices that can receive power from the particular device 110, (ii) conditions or triggers required for a device to supply rather than to receive power (e.g. inductive pairing that lasts more than a specific duration and/or when the other device is depleted in power).

(529) The computing device 110 may also determine the purpose or functionality provided from the docking station based on the docking station's class (using information that is communicated inductively). Such information may be communicated to the computing device 110 during the inductive pairing process. For example, a docking station may identify itself as a media dock during the inductive pairing process. Accordingly, the computing device 110 (which may correspond to, for example, a mobile computing device) may include information to enable the device 110 to use resources of the media dock, such as speakers. For example, the computing device 110 may include programming to enable it to configure itself so that it's audio output can subsequently be communicated to the dock for output on the dock's speakers.

(531) Similarly, the computing device 110 may associate a particular environment with a particular device, and implement configuration or settings based on the associated environment. For example, the device 110 may recognize that it is inductively paired with another device that is public (e.g. public terminal). For public or unsecure environments, the computing device 110 may store security profiles as to what information may be shared or how the device may be used. Similarly, the environment may be deemed secure, in which case the security profile may enable more data sharing with less security measures.

(533) The computing device 110 may store instructions for utilizing resources that may be available to the docking station. For example, the device 110 may store configuration information that identifies a particular dock, and devices connected to that device (e.g. personal computer), in order to enable subsequent data sharing mode/functionality with the connected device.

Similar instructions may be kept on the computing device 110 for instances when the docking station is determined to have display capabilities (e.g. a monitor). In such instances, the computing device may store instructions on sharing or transmitting display content to the other device (possibly using an alternative communication medium) so as to share, split or stretch its own display content.

As described, the computing device 110 can then be preconfigured to operate in a specific mode (or perform certain functions) for a particular device, device class, environment and/or condition. However, some or all of the instructions or data described may be communicated to the device 110 during the inductive pairing process. For example, computing device 110 may include its own profile information which it can communicate to another device upon a first instance of those two devices being inductively paired. The self provided profile information may include user designations or configurations. The profile information communicated from device 110 may, for example, identify the devices resources (e.g. files, hardware), so that another device may utilize such resources during a sharing mode. The profile information may be communicated from the device 110 in the first instance, and optionally updated based on changes to the devices resources or user-provided settings.

The computing device 110, as configured, can detect an inductive pairing with another device. (530) During the inductive pairing, the device 110 receives information that enables it to determine one or more following: (i) the specific device that is being paired to, (ii) the class of the device, and/or (iii) other information which may be communicated from the other device during the inductive pairing process. Likewise, device 110 may communicate its device identifier, class, or other information to the paired device. The other information may include, for example, predetermined information that may limit or define what information is shared from the device. The device class may defined by one or more of the following: the device model, the manufacturer of the device, the operating system used by the device, the functionality or capabilities of the device, and or version number to specific applications or firmware provided by the device. The identifier of the device may be provided by information such as the serial number, device name (e.g. computer name) or the owner of the device.

In response to the exchange of information, a sharing mode functionality is implemented on the device 110 (540). Data sharing mode may be selected on device 110 based on parameters that include one or more of the following: the identifier of the paired device, the class of the paired device, detected environment or use conditions in connection with the inductive pairing of the two devices, and user designations. In some embodiments, the data sharing mode may be initiated automatically. In other variations, the data sharing mode is performed on computing device 110 after the user is prompted. Still further, some embodiments provide that it data sharing mode requires input from the user, including input to initiate the data sharing mode and input to perform actions in connection with the data sharing mode on the device.

The computing device 110 may store profile information, including data and instructions, for enabling a subsequent data sharing functionality or mode that is specific to the paired device (or its class). Such profile information may be selected or configured based on parameters such as the device class or device identifier, and other predefined triggers. However as mentioned, some or all of the profile information (for selecting or configuring the sharing mode or functionality) may also be determined from the paired device, such as during the inductive pairing process (or afterwards, from communications on the alternative channel).

As an alternative to sharing mode, limited data transfer or sharing functionality may be performed. For example, the result of one device being inductively paired to another device may be that one or both devices receive a prompt, which requests that the users confirm or reject subsequent data transfer operations. If one or both users deny a request, no further data sharing process may be performed. If, however, the user(s) confirm the data sharing requests, data sharing functionality such as described with other embodiments may be performed on one or both devices.

In addition to establishing the alternative data communication channel, some embodiments provide that a determination is made as to which of the two devices, if any, is to supply power. For example, even a mobile computing device such as shown by FIG. 1A through FIG. 1C may inductively supply power to another device. For example, as described above, computing device 110 may store information for determining when is to supply power, such as when the paired device is a device of a particular class, when the computing device 110 has sufficient power to share, and/or when the Ted device has less power than the computing device or is otherwise depleted.

Various types of actions and activities can be performed in a data sharing mode such as described with an embodiment of FIG. 5. Examples of such activities include: transferring records, files, or other information from one device to the other; synchronizing a set of records of data items stored on the two devices; transferring data outputted from one application to the other; transferring programmatic instructions for enabling use of resources on one device by the other device; transferring programmatic constructs for creating a user interface for controlling either the paired device or another device; and/or sharing content that is presented on the screen at one device with another device (extending or stretching a display). Some specific examples of data sharing modes and functionality are described in the use of scenarios presented below.

Furthermore, with reference to FIG. 5 and other embodiments described herein, a device can be configured to (i) inductively pair with multiple devices in a given sequence, and (ii) select which of the inductively paired devise it will communicate with using a particular RF communication channel. In one embodiment, the device 110 is configured to select which device it links to via the alternative communication channel based on pre-determined conditions or selection criteria. For example, in the case where a device inductively pairs to multiple devices of the same type (e.g. media station #1 and media station #2), the device 110 may select to output media on the device that was paired last, even though both devices can receive the media output. If devices are of different type (e.g. media station and PC), or use different RF communication channels (WiFi or Bluetooth), an embodiment may provide that both RF links are used concurrently. Thus, the device 110 may include logic to select, from amongst multiple inductively paired devices that can receive data over one or more RF channels, which device is to receive the RF data using the alternative RF channel. The profile information stored with individual devices may be used to implement such logic.

Still further, the device may include logic for assigning a first RF channel to a device, and to assign a different RF channel to another device. Such logic enables multiple inductively paired devices to receive data over multiple different RF channels.

USAGE SCENARIOS

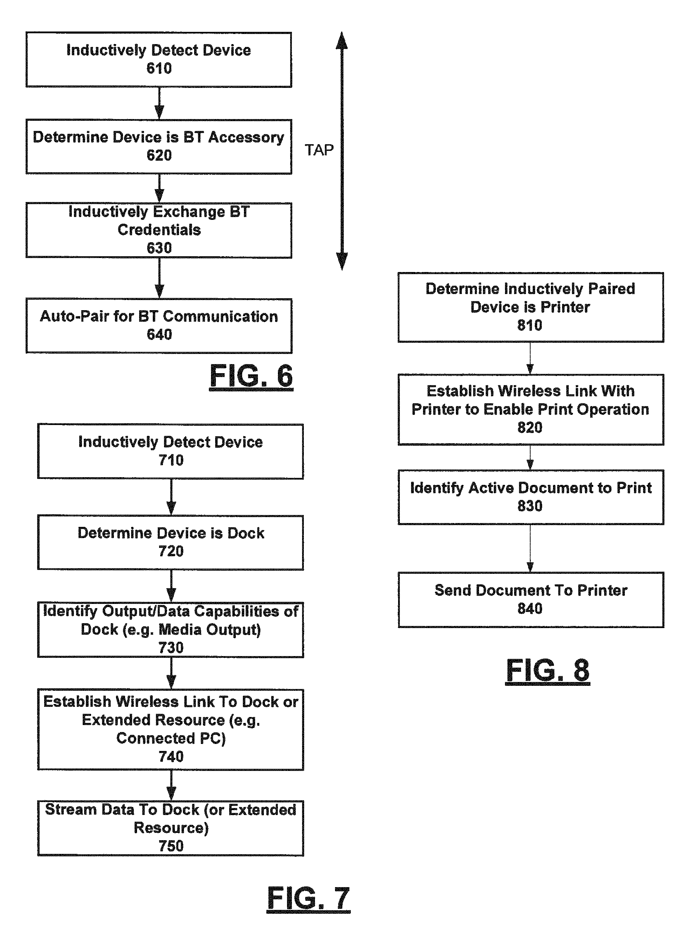

In describing embodiments of FIG. 6-10, reference may be made to elements described with other figures for purpose of illustrating a suitable device or component for performing a step or sub-step being described. Additionally, while specific reference is made to FIG. IA through FIG. 1C (which illustrates a mobile computing device implementation), embodiments described may be implemented on various other computing form factors, such as laptops, tablets and other electronic devices.

With reference to FIG. 6, a method is illustrated for inductively pairing a computing device with an accessory device, according to an embodiment. The pairing may occur when the computing device 110 and an accessory are brought into contact with one another (e.g. tapped against each other). As an example, computing device 110 may correspond to a mobile computing device (e.g. cellular telephony device) and the accessory device may correspond to a wireless headset accessory. The computing device 110 detects another device (610) over the inductive link, and then determines from information communicated in the inductive link that the paired device is a particular type of accessory (620). The computing device 110 and accessory device may exchange credential information over the inductive link for establishing a Bluetooth (or other wireless communication link) (630). Thus, each device communicates its credentials for Bluetooth communications to the other device using the inductive communication medium. Such credential information may include, for example, device identifier and type information. Additionally, each device may be configured with instructions and data to enable that device to establish the Bluetooth connection with the other device using information received over the inductive link. As a result, the two devices may pair for Bluetooth communication. The pairing may occur automatically, in response to the two devices being inductively coupled (640).

Moreover, as described with other embodiments, the inductive coupling may occur by way of a tap or brief motion, where the computing device 110 and the accessory device are brought into contact or close proximity for a short duration of time. For example, the Bluetooth accessory could be tapped to the backend of the noble computing device, and within a short duration (e.g. less than one second) the two devices may be paired for Bluetooth communications. In this regard, the Bluetooth configuration that occurs as a result of the inductive pairing may be considered instantaneous.

FIG. 7 illustrates a method for inductively pairing a device with a docking station in order to communicate media for output, under an embodiment. The computing device 110 inductively detects another device, which in the example of FIG. 7, can correspond to a media station and dock (sometimes referred to as a "media dock") (710). The computing device 110 signals through the inductive communication medium information that identifies itself and/or its class. Likewise, the computing device 110 processes information received over the inductive communication medium to identify the paired device (by identifier or by class). From this information, the computing device 110 determines that the paired device is a media station dock (720). More specific information may also be determined, such as the output capabilities of the dock (730).

In one embodiment, the computing device 110 establishes an alternative wireless link to the dock (740). For example, the computing device 110 and the dock may establish a Bluetooth connection, similar to that with an embodiment of FIG. 6 or elsewhere this application. The alternative communication channel is then used to stream media data from the computing device to the dock for output on hardware components (e.g. speakers or monitor) of the dock (750). In the case of video, for example, output on the computing device 110 may be shared or transferred to the dock for display. In similar fashion, audio may be transferred and reproduced on speakers of the dock. Likewise, pictures may be transferred and rendered on display resources of the dock.

FIG. 8 illustrates a method for inductively pairing a device to a printer in order to enable subsequent print jobs, under an embodiment. In one embodiment, a printer may be equipped to include an inductive signal interface. For example, in inductive signal interface may be provided as a landing pad on the printer. Alternatively, the inductive signal interface may be provided as an attachment to the printer (840). A description of an inductively enabled printer is provided in U.S. Patent Application No. 12/620,478 (which is incorporated by reference).

As described with other embodiments, the computing device may be inductively coupled to the signal interface of the printer. On the computing device, the inductive pairing may be detected immediately, and the paired device is recognized as a printer (810). In some embodiments, the printer is recognized as a specific printer, such as the device's default printer, secure printer or home printer. Furthermore, the printer may be recognized as being of a particular type, such as one that is suited for printing photographs rather than documents. The information for recognizing the printer by identifier and type may be communicated over the inductive medium during the pairing process.

An alternative communication channels can be established with the detective printer, using credential information and data that is communicated during the inductive pairing process (820).

For device 110 being paired to a printer, the data sharing mode or operation of the computing device 110 includes printing a document on the printer. The document that is to be printed may be selected automatically, or with user input (830). In one implementation, the document that is to be printed is identified automatically, in response to the inductive pairing process being complete. For example, the computing device 110 may include a pre-configuration that identifies open documents at the time of the inductive pairing as being those preselected for print. Once inductive pairing occurs, those documents are automatically printed. As a variation, the user may be prompted to confirm that he wishes to print the document that is open. In other implementations, printing may be facilitated as result of the inductive pairing process, but the user input is required to manually select the document that is to be printed. For example, the user may be required to specify what document is to be printed, such as by way of creating a print job.

As an alternative or variation, the programmatic resources that the computing device 110 may require in order to create a print job on the paired printer may be communicated to the computing device 110 on-the-fly. For example, a print driver for the paired printer may be communicated from the printer to the computing device 110 by either of the inductive or wireless communication medium. As another variations, the device 110 may use an existing driver on the device to create print jobs. Still further, the printer may be equipped to handle documents communicated from the device, without the need for the device to have a specific driver for the paired printer.

Once the document is selected, the device 110 transmits the document to the printer. The document may be transmitted over the wireless link (e.g. Bluetooth).

FIG. 9 illustrates a method for inductively pairing a mobile computing device to a computer to share content or resources, under an embodiment. The computing device 110 inductively detects a larger computer in the pairing process (910). For example, the computing device 110 may correspond to a mobile device, and the paired computer may correspond to a fully functional laptop or personal computer, having a larger display screen, faster processing resources, and larger memory. As with other embodiments, the inductive pairing may result in the devices identifying themselves to one another over the inductive link. As a result of the inductive pairing, the computing device 110 may identify the paired computer by class and identifier.

In some embodiments, an alternative communication channel may be established between the two devices, using credential information that is exchanged over the inductive link (920).

Following the establishment of the alternative communication channel, the computing device 110 may enter into a sharing mode with the paired computer (930). The paired computer may also enter into a sharing mode. According to some embodiments, the particular data sharing mode that is implemented may be determined by the identity of the paired computer, the class of the computer, and/or predetermined configurations or settings on the computing device 110. As an addition or variation, predetermined configuration information and/or settings may designate what content or data is to be shared with the computer (e.g. based on class or identity of the paired computer).

The data sharing mode may be performed automatically or in response to input from the user of one or both devices. Accordingly, some steps involved in the data sharing process can be performed automatically and in response to the inductive pairing. In variations, the data sharing mode may be implemented substantially automatically, with some manual input from the user that can confirm the user's intent. Additionally, some embodiments provide that one or both devices generate prompts to enable the user of that device to confirm a specific data sharing activity or class of activities. Still further, some embodiments provide for more manual involvement in the data sharing process. For example, the user may perform certain actions that result in data being transferred or shared with the paired computer. The actions include, for example, enabling the user to transfer newly generated or updated application data to the other computer by closing an application that created such data.

According to embodiments, a data sharing mode may be implemented to provide for one device to share content that is being rendered on that device with the paired device. For example, the mobile computing device may render a webpage. Upon the inductive pairing occurring, the webpage may be transferred and rendered on the larger display of the paired computer. Similarly, the computing device 110 may render a media file. As a result of the inductive pairing occurs, the media file may be transferred to the paired computer for playback or display.

As another variation, the inductive pairing between the two computing devices may result in records or files being transferred from one computer to the other. For example, as a result of the inductive pairing process, records and files on the computing device 110 may be backed up or archived on the paired computer. The two devices may also perform synchronization of records or other information.

Still further, as described with other embodiments, the inductive pairing process may communicate login and password information to the larger computer unlock, thereby giving access to the resources of a large computer. Numerous other variations are possible as to how the computing device 110 shares data with the paired computer.

According to some embodiments, the data sharing mode of an inductively paired device can include controlling the other device through an alternative communication medium. In some variations, an interface for enabling the user to control a paired device over an alternative communication medium may be communicated as part of the sharing mode implemented by one or both devices. For example, computing device 110 may receive data (inductively and/or over the alternative communication channel) for generating a user-interface to control the paired device (e.g. over the alternative communication channel). In this respect, the sharing mode may include sharing (i) control data (e.g. commands), which is communicated by one device to control the other, and/or (ii) data for generating a user interface on the other device for enabling the other device to control some operations or functionality on device 110.

FIG.10 illustrates a method for inductively pairing a computing device to a gaming environment to provide gaming controls on the mobile computing device, under an embodiment. The computing device 110 may detect a paired device over the inductive medium, as described with other embodiments (1010). The paired device may be identified by class or identifier.

Additionally, computing device 110 may detect that the paired device is being used in a gaming environment (1020). In some cases, for example, the paired device may correspond to a gaming console, in which case computing device 110 may use the information determined from the inductive pairing to establish functionality for facilitating or enabling the gaming environment. In one embodiment, computing device 110 implements functionality to generate a user interface that signals commands and game controls to the gaming console.

In another embodiment, the paired device may not readily be identifiable as a gaming console (as gaming is not limited to only gaming consoles). Rather, the gaming environment may be reproduced on, for example, a personal computer. During the inductive pairing process, or even afterwards by way of an alternative communication channel, the paired device may communicate information that triggers the computing device 110 to determine that the paired device is operating in a gaming environment. For example, the computing device 110 may determine from information communicated inductively that the paired device is a personal computer. Additionally, the computing device 110 may determine that the paired device has a gaming application open. When the condition is present, the computing device 110 may infer the presence of the gaming environment.

Subsequent to the inductive pairing, computing device 110 determines the gaming environment and establishes an alternative wireless communication channel with the paired device (1030). When the gaming environment is detected, the computing device 110 may generate content for enabling gaming control functionality on the computing device 110 (1040). For example, the display screen content generated on a touch sensitive display screen may reflect gaming controls such as a multidirectional feature and/or a set of action "buttons" for enabling various gaming actions. The computing device 110 may then directly receive input from the user via the gaming control. The input may be shared as commands to the device that is the gaming console (1050).

Control functionality may be incorporated into the sharing mode or functionality described with various embodiments described in this application. With reference to FIG. 9, for example, computing device 110 may also receive the ability to control functions on the paired computer, and vice-versa. For example, in addition to sharing displayed content, the user may be able to manipulate how that content is displayed on the paired computer by entering input directly onto the computing device 110. The input entered by the user may be translated into commands that are communicated over the alternative communication channel to the paired device.

Similarly, with respect to an embodiment of FIG. 8, the computing device 110 may also be able to control the paired printer. For example, the user may be able to control print operations (e.g. bring the printer online and/or adjust print settings) in addition to sending print jobs to the printer over the alternative communication channel.

The instructions and data required to control the paired computer/device may be stored in association with the profile for the computer (by identifier or class). Alternatively, some or all of the data and/or instructions may be received by way of the inductive link, or subsequent data transfer (e.g. by way alternative communication channel).

In addition, some embodiments may provide the ability for the user to control the paired device through use of a specialized control interface. For example, if the paired device includes a television (e.g., a docking station that is connected to a television, or an integrated component of a television), the control functionality may be presented to the user through a graphic user interface that simulates a remote control for a television. Similar configurations can be made on a computing device for other applications. Data used for generating such a user interface may be stored on the computing device 110, for use with a corresponding paired device (e.g. for a particular device or class of devices). Alternatively, some or all of the data necessary for generating the user interface may be communicated from the paired device at the time of the inductive pairing, and/or subsequently through the alternative data communication channel.

Some embodiments enable one device to be inductively linked to multiple devices at one time. Multiple such pairings may be accomplished by, for example, by inductively pairing device 110 to a first device to establish a first RF link, then inductively pairing device 110 to a second device to establish a second RF link.

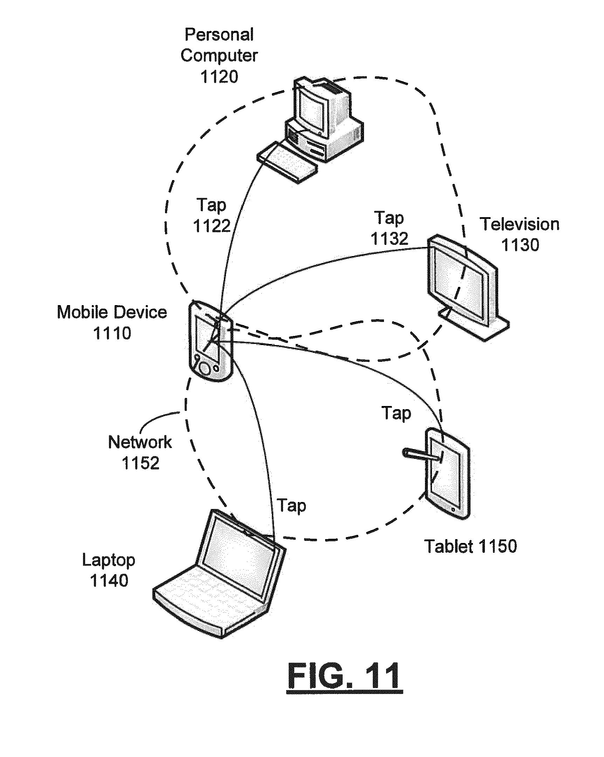

FIG. 11 illustrates a multi-device environment in which inductive pairing can be used to interconnect devices, according to an embodiment. More specifically, under some embodiments, inductive pairing can be used to establish non-inductive connectivity amongst devices that were not actually inductively paired to one another. Still further, inductive pairing may be used to establish a network of interconnected devices, in which as few as only one device can be used to inductively pair with each device that is to form a component on the network.

With reference to FIG. 11, a set of use devices includes mobile device 1110, personal computer 1120, television 1130, laptop 1140 and tablet 1150. In the example provided, each device is inductively enabled, so as to include an inductive signal interface (see FIG. 2 and related applications). Additionally, each device includes the ability to communicate wirelessly (e.g. using RF, such as Bluetooth or 802.11) with other devices.

As explained with other embodiments, an inductive pairing may be accomplished by contacting one device to another. An inductive pairing between two devices may be accomplished by tapping two devices against one another (with inductive signal interfaces of the respective devices being aligned). Further in accordance with embodiments such as described, the inductive pairing of two devices can result in (i) the two devices establishing an alternative wireless link, using data communicated inductively (e.g. credentials, device identifier, network location etc.), and (ii) at least one of the two inductively paired devices then exchanging data and information (e.g. operating in a sharing mode).

According to some embodiments, one device may inductively pair with two other devices in order to enable those two devices to communicate wirelessly (by RF) with one another. For example, in FIG. 11, mobile device 1110 may inductively pair ('tap') to television 1130, then tap to the personal computer 1120, in order to directly connect the personal computer 1120 to the television 1130. In an embodiment, credential information (e.g. device identifier, network location etc.) of the television 1130 is received by the mobile device 1110 during the inductive pairing process between those two devices (tap 1132). The mobile device 1110 then carries the credential information to the personal computer 1120 to establish the link between the personal computer and the television. The devices may be configured to automate, or implement programmatically, the protocol or process in which the wireless RF links are established using their own credential information and that of the directly paired device (e.g. connect mobile device 1110 to television 1130). One or more of the devices (e.g. mobile device 1110) may also be configured to automate, or implement programmatically, the protocol or process by which it communicates the credential information of a previously paired device (e.g. television 1130 via tap 1132) to a newly inductively paired device (e.g. personal computer 1120 via tap 1122) in order to establish a direct wireless RF link (e.g. Bluetooth, 802.11) link between the two devices.

As a variation or alternative, a user may join a device on a network of devices by inductively pairing a device that is on the network to a newly joining device. For example, with reference to FIG. 11, mobile device 1110 may pair with the laptop 1140, then pair with the tablet 1150 in order to create a three-device network 1152 in which each device is capable of communicating with the other devices. More devices can be added to such a network. Individually added devices may operate in a share mode with one or more of the other interconnected devices of the network. With each inductive pairing, mobile device 1110 (or another device) may exchange its own credential information, as well those of other devices it has inductively paired with, in order to enable the newly connected device to access and communicate with other devices. As an alternative or variation, one device (e.g. mobile device 1110) may act as a primary device that links all other devices to one another. Thus, the device 1110 may be used to connect with other devices, and the interconnected devices can subsequently communicate to one another via the primary device.

According to some embodiments, the action required for inductive pairing (e.g. tapping the inductive facades of two devices together) may serve as a command input. Command input may enable a user to designate, for example, one or more of the following: (i) what devices are to be interconnected to communicate to one another; (ii) what devices are to be part of a set of interconnected devices that communicate to one another; (iii) what devices are to be selected to communicate to one another or to a particular source; and/or (iv) what devices are to be selected to have priority or be considered a primary for a particular activity. Moreover, some embodiments assign separate inputs to second and third taps, or double taps. Numerous such variations are possible.

In a multi-device paired environment, the inductive pairing (e.g. tap) can be used as selection input. For example, if a media dock is paired with tablet 1150, and then the mobile device 1110 taps to the media dock, the media dock may prioritize or select data of the mobile device 1110 over that of the tablet 1150.The tap input may signify that the device that is to use the media dock (or have priority rights to the media dock in case of conflict) is, for example, the device that was most recently tapped to the media dock.

Tapping devices as command input can also provide or configure functionality to the sharing mode of operation amongst devices. For example, personal computer 1120 is supplying data for output on television 1130, the re-tapping of the mobile device 1110 to the television may cause the television to output a split screen (to render content from both personal computer and mobile device) or picture-in-picture (e.g. primary picture provided by most recently tapped device).

It is contemplated for embodiments described herein to extend to individual elements and concepts described herein, independently of other concepts, ideas or systems, as well as for embodiments to include combinations of elements recited anywhere in this application. Although illustrative embodiments of the invention have been described in detail herein with reference to the accompanying drawings, it is to be understood that the invention is not limited to those precise embodiments. As such, many modifications and variations will be apparent to practitioners skilled in this art. Accordingly, it is intended that the scope of the invention be defined by the following claims and their equivalents. Furthermore, it is contemplated that a particular feature described either individually or as part of an embodiment can be combined with other individually described features, or parts of other embodiments, even if the other features and embodiments make no mentioned of the particular feature. This, the absence of describing combinations should not preclude the inventor from claiming rights to such combinations.

## Claims

1. A computing system comprising:
a first device configured to inductively pair with a second device to transmit or receive data;
wherein the first device is configured to respond to inductively pairing with the second device by (i) determining an identity or class of the second device, and (ii) performing a function for communicating with the second device;
wherein the function is performed automatically and is based on the identity or class of the second device; optionally
wherein the first device is configured to perform the function instantaneously upon inductively pairing with the second device.

2. The computing system of claim 1, wherein the function performed by the first computing device is to prompt a user to accept a sharing mode with the second computing device, the sharing mode providing that a data resource on the first computing device is shared with or communicated to the second computing device.

3. The computing system of claim 1 or 2,
wherein the first computing device is configured to implement a sharing mode as the function that is performed in response to the inductive pairing with the second computing device, and
wherein the first computing device operates in the sharing mode by performing at least one of (i) sharing a data resource on the first computing device with the second computing device, or (ii) accessing and using a data resource on the second computing device.

4. The computing system of claim 3, wherein the first computing device implements the sharing mode with the second computing device using a radio frequency communication port;
and/or
wherein the first computing device is configured to instantaneously implement the sharing mode upon inductively pairing with the second computing device, and wherein the first computing device implements the sharing mode with the second computing device using a radio frequency communication port.

5. The computing system of claim 3 or 4,
wherein the first computing device is configured to inductively pair to the second computing device in order to determine, from the identity or class of the second computing device, that the second computing device can provide at least one of (i) media output, or (ii) a media resource for playback on the first computing device, and
wherein the first computing device is configured to operate in the sharing mode by signaling a media resource to the second computing device for output.

6. The computing system of any of claims 3 to 5, wherein the first computing device is configured to inductively pair to the second computing device in order to determine, from the identity or class of the second computing device, that the second computing device can be controlled for a particular use by the first computing device.

7. The computing system of claim 6, wherein the first computing device is configured to provide an interface on the first computing device that can be operated by a user of the first computing device in controlling the second computing device for the particular use.

8. The computing device of any preceding claim, wherein the first computing device is configured to determine, based at least in part on either the determined identity or class of the second computing device, whether to inductively transmit power to or receive power from the second computing device.

9. A method for operating a first computing device, the method comprising:
inductively detecting a second device;
determining an identity or class of the second device; and
in response to inductively detecting the second device, automatically performing a function that includes communicating with the second device, the function being based on the identity or class of the second device.

10. The method of claim 9, wherein performing the function includes exchanging data to establish a communication link with the second device over a radio-frequency communication port of the first computing device; and/or
wherein performing the function includes prompting the user to accept operating the first computing device in a sharing mode, the first computing device communicating data for a particular purpose to the second device in the sharing mode; and/or
wherein performing the function is performed in less than one second upon the first computing device and the second device being brought into sufficient proximity to inductively link; and/or
wherein performing said operation includes selecting the operation that is to be performed based on the identity or class of the second device; and/or
wherein determining the identity or class of the second device is performed using data that is inductively communicated to the first computing device.

11. The method of claim 9, further comprising establishing a radio-frequency link with the second device by: (i) determining credential information of the second device from data that is inductively communicated by the second device to the first computing device; and (ii) inductively transmitting credential data of the first computing device to the second device.

12. The method of claim 11, further comprising selecting a data set to transmit to the second device over the established radio-frequency link.

13. The method of claim 12, wherein the selecting data set includes content rendered on a display of the first computing device; and/or
wherein selecting the data set includes selecting a file that is to be printed from the second device; and/or
wherein selecting the data set includes selecting information for authenticating a user of the first computing device on a local-area network that is accessible through the second device.

14. The method of claim 11, further comprising selecting an application to launch based on the identity or class of the second device, the application generating data for transmission to the second device and/or processing data transmitted from the second device; and/or
wherein selecting an application to launch includes launching application to provide an interface for operating the second device on the first device.

15. The method of claim 9, further comprising maintaining the first computing device in an inactive or low-power state, and waking the first computing device in response to detecting a trigger that is indicative of another device being proximate, wherein inductively detecting the second device is performed after the first computing device is wakened.

16. The method of claim 15, wherein detecting the trigger includes detecting that a strong wireless radio-frequency signal is present; and/or
wherein detecting the trigger includes detecting a trigger using an acoustic or light sensor.

17. The method of claim 16, wherein detecting that the strong wireless radio-frequency signal corresponds is present includes detecting a signal that exceeds a minimum threshold for a communication medium that corresponds to one of Bluetooth, 802.11 or cellular.

18. A computing device comprising:
one or more processors;
an inductive signal interface;
wherein the inductive signal interface is structured to inductively receive data from an inductive signal interface of a second device when the two devices are in sufficient proximity;
wherein in response to the computing device inductively receiving the data from the second device, the one or more processors:
identify a identity or class of the second device from data that is received over the inductive signal interface, and
automatically perform one or more operations based on the identity or class of the second device.

19. The computing device of claim 18, further comprising:
a memory that stores data, including a plurality of devices profiles;
wherein the one or more processors perform the one or more operations by transmitting selected data to the second device based on a stored device profile associated with the second device.

20. The computing device of claim 18, further comprising:
a memory that stores data, including one or more sets of credential data, and
wherein the one or more processors perform the one or more operations by transmitting a set of credential data to the second device in order to extend a computing environment of the first computing device.

21. The computing device of claim 20, wherein the transmitted set of credential data corresponds to data for enabling a user of the computing device to access a local area network that is provided through the second device.

22. The computing device of claim 18, wherein the one or more processors perform the one or more operations by switching into a sharing mode with the second device, the one or more processors causing a data resource on the computing device to be shared with the second device when operating in the sharing mode.
